# FASCICULE DE BREVET EUROPEEN

(11) **EP 0 649 894 B1**
(45) Date de publication et mention de la délivrance du brevet: **02.12.1998**
(21) Numéro de dépôt: 94420279.5
(22) Date de dépôt: 20.10.1994
(51) Int. Cl.: C09J 133/06

(54) **Compositions adhésives à base de dispersions aqueuses de résines synthétiques et leur utilisation pour le collage de revêtements muraux ou de sol**
Adhäsivzusammensetzungen auf Basis wässriger Dispersionen von Kunstharzen und ihre Anwendung zum Verleimen von Wand- und Bodenbekleidungen
Adhesive compositions based on aqueous dispersions of synthetic resins and their utilisation for glueing of wall or floor coverings

(30) Priorité: 26.10.1993 FR 9312976
(43) Date de publication de la demande: 26.04.1995
(73) Titulaire: LAFARGE MATERIAUX DE SPECIALITES, 92120 Montrouge (FR)
(72) Inventeur: Mansoux, Sandrine, F-69100 Villeurbanne (FR); Stock, Claude, F-38460 Soleymieu (FR)
(74) Mandataire: Tilloy, Anne-Marie

(56) Documents cités:
- EP-A- 0 423 613
- GB-A- 2 061 990
- GB-A- 2 077 750
- US-A- 4 225 496

## Description

De nombreux revêtements de sol tels des moquettes, tapis, linoléum, dalles en PVC, etc. doivent être collés sur un substrat (dalle en béton, chape de mortiers divers, mortier de ragréage, carrelage, dallage PVC et planchers divers) avant de pouvoir être affectés à leur usage normal.
De même, des revêtements muraux de nature diverse (moquette, lés en PVC, liège, polystyrène, etc.) doivent aussi être collés, par exemple sur des murs en béton.

Pour ce faire, on a utilisé jusqu'alors des compositions adhésives renfermant généralement :
A) une dispersion aqueuse d'un polymère ou copolymère filmogène tel du styrène-butadiène ou des copolymères acryliques filmogènes ou d'un mélange de tels polymères pour obtenir des caractéristiques mécaniques et un pouvoir collant ;
B) une ou plusieurs charges minérales (encore appelées "fillers" ou "extenders") telles du carbonate de calcium, des silices, du talc ; ces charges dont l'usage reste facultatif au plan technique peuvent avoir un léger pouvoir épaississant ;
C) de la colophane et/ou des dérivés de la colophane pour apporter le pouvoir "tackifiant" ou collant immédiat ;
D) un ou plusieurs éthers cellulosiques, épaississants et, si des charges minérales sont présentes,
E) un colloïde protecteur sensé réagir avec les charges minérales, et par suite, empêcher la réaction desdites charges avec le latex, ce qui provoquerait la floculation du mélange.

Bien entendu, ce type de composition peut renfermer en faibles quantités un ou plusieurs additifs tels que :
a) un ou plusieurs agents dispersants,
b) un ou des fongicides,
c) un ou des bactéricides,
d) un ou plusieurs agents antimousses
ainsi que des quantités variables d'eau.

La colophane (dérivé de la résine de pin) se présente usuellement sous forme de cristaux plus ou moins grossiers et doit donc être dissoute au préalable dans un solvant organique.
Ses dérivés se présentent généralement sous une forme pâteuse, plus ou moins visqueuse, qui doit être diluée et qui est difficile à introduire dans la composition. Le solvant organique est parfois remplacé par un plastifiant tel le dioctylphtalate, les glycols "lourds" ou d'autres esters, dont l'usage est bien connu de l'homme de l'art.

Le souci croissant de l'environnement, du respect des conditions d'hygiène et de sécurité comme de la santé des utilisateurs, professionnels ou non, incitent fortement les fabricants de telles compositions à en supprimer, totalement ou partiellement, les solvants aromatiques et les solvants volatils ou dits "légers", c'est-à-dire ceux dont le point d'ébullition sous pression normale est inférieur ou égal à 200°C.

Il serait donc manifestement très souhaitable de pouvoir supprimer dans de telles compositions la colophane et/ou ses dérivés.
Or, une telle suppression entraîne généralement la diminution, voire la suppression du pouvoir collant initial (encore appelé "tack immédiat") et une diminution des temps ouverts, c'est-à-dire de la période pendant laquelle une couche de colle déposée sur un substrat présente encore un pouvoir adhésif suffisant. A cet égard, on se reportera aux exemples comparatifs 1 et 2 ci-après qui mettent bien en évidence la perte de ces performances quand on supprime la colophane d'une colle conventionnelle.

Par ailleurs, s'agissant du pouvoir collant initial d'une telle composition exempte de colophane et/ou de ses dérivés, il convient de noter que celui-ci est d'autant plus faible que le taux de charges de ladite composition est important.

C'est pourquoi, la présente invention a pour objectif l'utilisation d'une nouvelle composition adhésive pour le collage des revêtements muraux ou de sol, ladite composition étant exempte de colophane et/ou de dérivés de la colophane mais présentant toutefois un tack et un temps ouvert satisfaisants.
Par temps ouvert satisfaisant, la Demanderesse entend un temps de 15 à 90 min et, de préférence, de 30 à 60 min.

La présente invention a donc pour objet l'utilisation pour le collage des revêtements muraux ou de sols d'une composition adhésive ayant un temps ouvert de 15 à 90 mn et exempte de colophane et/ou de dérivés de la colophane, cette composition adhésive se présentant sous la forme d'une émulsion eau dans huile et comportant comme constituants essentiels :
a) au moins une dispersion aqueuse d'un ou de plusieurs polymères ou copolymères acryliques possédant une température de transition vitreuse inférieure à +5° C ;
b) des charges minérales finement divisées dont les dimensions des grains sont comprises entre 0,05 et 500 µm et/ou au moins un agent épaississant, et
c) au moins une huile, végétale ou minérale, liquide à température ambiante.

Dans un autre domaine technique, on connaît, par la demande de brevet européen n° 0423613, des compositions d'étanchéisation ou mastics d'étanchéité pour joints comprenant une dispersion aqueuse d'un ou de plusieurs polymères, un éther de cellulose non ionique spécifique et, éventuellement, un ou plusieurs agents tels qu'un agent plastifiant, par exemple des produits paraffiniques chlorés. Ces mastics d'étanchéité pour joints sont prévus pour résister à la pluie, avant durcissement.

L'un des constituants essentiels des compositions selon la présente invention est une dispersion aqueuse d'un polymère ou copolymère acrylique. Peuvent être utilisées diverses dispersions aqueuses (connues de l'homme de l'art) de copolymères dérivant en général d'esters acryliques d'alcanols contenant de 1 à 8 atomes de carbone (tels l'acrylate de n-butyle et l'acrylate de 2-éthylhexyle), qui peuvent contenir additionnellement en liaison polymère des acides carboxyliques à insaturation alpha, bêta - oléfinique tel l'acide acrylique ou l'acide méthacrylique ainsi que d'autres comonomères tels le méthacrylate de méthyle ou l'acrylonitrile ou l'acétate de vinyle et le styrène, sous réserve que ces dispersions aqueuses de copolymères soient capables de donner naissance, après séchage à température ambiante sur un support plat, à un film plus ou moins poisseux. Il convient en outre que la température de transition vitreuse du polymère ou copolymère acrylique soit inférieure à +5°C, de préférence inférieure ou égale à -20°C. En effet, l'emploi de polymère ou copolymère acrylique de température de transition vitreuse supérieure ou égale à 5°C nécessite l'emploi d'un agent coalescent. Or, la présence d'un tel agent n'est pas compatible avec l'obtention d'un tack et d'un temps ouvert satisfaisant. De préférence encore, cette température n'excède pas -30°C. Les meilleures performances s'agissant du pouvoir collant initial ont été obtenues avec des dispersions de polymères ou copolymères acryliques possédant une température de transition vitreuse de l'ordre de -35 à -45°C et capables de donner naissance, après séchage à température ambiante sur un support plat, à un film plus ou moins poisseux. De nombreuses dispersions aqueuses sont disponibles dans le commerce ; certaines d'entre elles renferment un ou des agents émulsifiants anioniques et/ou non ioniques. On recourt de préférence à celles des dispersions du commerce présentant une teneur pondérale en matières sèches supérieure à 45% et pouvant couramment atteindre 60%, voire d'avantage. On peut également recourir à des dispersions aqueuses renfermant plusieurs polymères et/ou copolymères acryliques se différenciant notamment par leur température de transition vitreuse : ainsi, dans le cas où les compositions selon l'invention renferment un polymère ou copolymère acrylique ayant une température de transition vitreuse comprise entre -20 et +5°, il sera recommandé de lui associer un polymère ou copolymère acrylique ayant une température de transition vitreuse plus basse pour améliorer le tack. A titre d'exemple de dispersions aqueuses d'homo- ou copolymères acryliques convenant à la préparation des compositions selon l'invention, on se référera utilement au tableau (I) figurant dans la partie concernant les exemples de réalisation.

La quantité de dispersion utilisée peut varier dans de larges limites dans la mesure où elle apporte une teneur d'au moins 20% en poids de liant calculés sur la matière sèche de la composition. De préférence, cette teneur n'excède pas 40%.

Les compositions selon l'invention renferment également des charges minérales finement divisées et/ou au moins un agent épaississant. Par charges minérales finement divisées, on entend des charges dont les dimensions des grains sont comprises entre 0,05 et 500 µm, de préférence entre 1 et 200 µm.
Les charges minérales susceptibles d'être utilisées sont des produits bien connus de l'homme de l'art. A titre d'exemples de charges minérales, on peut citer : le carbonate de calcium, le sulfate de baryum, le sulfate de calcium, le talc, les silices broyées, les silices précipitées, le silicate d'alumine et le lithopone.
La teneur en charges minérales peut varier dans de larges limites ; elle est de préférence inférieure ou égale à 60% en poids de la matière sèche de la composition, des teneurs plus importantes pouvant conduire à une diminution importante du tack. De préférence encore, cette teneur est supérieure ou égale à 20% en poids de la matière sèche de la composition.
Les agents épaississants susceptibles d'être utilisés dans le cadre de la présente invention sont également des produits bien connus de l'homme de l'art. A titre d'exemples d'agents épaississants, on peut citer : les polymères acryliques hydrosolubles, les composés cellulosiques, les polyuréthanes, les argiles gonflantes, la gomme de xanthane et la gomme de guar.

La teneur en agent épaississant peut varier dans de larges limites ; elle est usuellement comprise entre 0,05 et 2% en poids de la matière sèche de la composition et, de préférence entre 0,1 et 0,5% en poids.

Les compositions selon l'invention renferment également au moins une huile, végétale ou minérale. On entend par huile végétale ou minérale, un corps gras liquide à température ambiante et possédant un faible pouvoir solvant des polymères ou copolymères acryliques, ce pouvoir étant de préférence quasiment inexistant.

Les huiles végétales susceptibles d'entrer dans la constitution des compositions adhésives en cause peuvent être choisies parmi les huiles siccatives telles l'huile de lin, l'huile de ricin et l'huile de tung (ou huile de bois de Chine) ; les huiles semi-siccatives telles l'huile de soja, l'huile de tournesol, l'huile de graines de coton et l'huile d'olive.

Les huiles minérales susceptibles d'entrer dans la constitution des compositions adhésives en cause peuvent être choisies parmi les huiles paraffiniques en C8-C16 linéaires et les huiles naphténiques raffinées et de teneur réduite en polynucléaires aromatiques.

Bien entendu, il est tout à fait possible d'utiliser des mélanges d'huiles végétales ou d'huiles minérales ou des mélanges d'huiles de ces deux catégories.

La teneur en huile des compositions selon l'invention peut varier dans de larges limites. Pour une bonne mise en oeuvre, une teneur comprise entre 2 et 10% en poids de la matière sèche de la composition est plus particulièrement recommandée.

Les compositions selon l'invention peuvent également renfermer, de manière avantageuse, un agent capable de disperser les charges minérales.

A titre d'exemples de tels agents, bien connus de l'homme de l'art, on peut citer les dispersants acryliques, le tripolyphosphate et les polynaphtalènesulfonates.
Le ou les dispersants sont généralement utilisés en faibles quantités, de l'ordre de 0,05 à 0,5% en poids de la matière sèche de la composition et, de préférence, de 0,1 à 0,2% en poids de ladite matière sèche.

Les compositions selon l'invention peuvent également renfermer, de manière avantageuse, un agent tensioactif dont la fonction principale est de provoquer la formation d'une émulsion eau dans l'huile.
A titre d'exemples de tels agents, bien connus de l'homme de l'art, on peut citer les alcools gras éthoxylés, les alcools gras éthoxylés phosphatés ou sulfatés, les alkyl phénols éthoxylés, les aryl-alkyl phénols éthoxylés et ces mêmes phénols éthoxylés, phosphatés ou sulfatés, les huiles végétales modifiées telle l'huile de ricin éthoxylée. Lorsque l'on recourt à certaines dispersions de liant commerciales, un ou des tensioactif(s) seront introduits d'office dans les compositions adhésives en cause par le fait que ces dispersions les renferment à l'origine ; même dans ce cas, il peut s'avérer judicieux d'introduire une quantité supplémentaire d'au moins un tensioactif afin de favoriser l'apparition d'une émulsion eau dans l'huile et ainsi de mieux maîtriser le temps ouvert des compositions adhésives.
Il est préférable que la quantité de tensioactif (agent émulsifiant) n'excède pas 2% en poids de l'extrait sec de la composition.

Les compositions selon l'invention peuvent également renfermer, de manière avantageuse :
- un agent de cohésion dont la fonction principale est d'augmenter les propriétés mécaniques, en particulier la force d'arrachage du revêtement collé. L'agent de cohésion est généralement utilisé à raison de 10 à 50 % en poids de la quantité totale de polymère ou copolymère acrylique et, de préférence, de 20 à 40 % en poids.
- et/ou un latex naturel ou caoutchouc dont la fonction principale est d'augmenter l'élasticité, ceci afin que les compositions selon l'invention, une fois durcies, puissent accepter, sans dommages, les déformations normales et régulières auxquelles elles sont soumises et de faciliter l'arrachement des revêtements muraux ou de sol avec ces compositions adhésives. Le latex naturel est généralement utilisé à raison de 0 à 50 % en poids sec de la quantité totale de polymère (i.e. (co)polymère acrylique + latex naturel), voire à une teneur supérieure. De préférence, le latex naturel est utilisé à raison de 20 à 40 % en poids sec de la quantité totale de polymère (i.e. (co)polymère acrylique + latex naturel).

En général, une composition prête à l'emploi renfermera au minimum l'eau apportée par le liant (souvent introduit sous forme d'un latex). Pour une bonne mise en oeuvre, les compositions prêtes à l'emploi renfermeront de 10 à 40% en poids d'eau par rapport à sa totalité et, de préférence, de 20 à 30 % en poids d'eau.

Bien entendu, les compositions selon l'invention peuvent renfermer divers additifs classiquement utilisés dans le domaine technique en cause ( agents fongicides, agents bactéricides, agents antimousses...) dont la quantité n'excédera généralement pas 1% en poids de l'extrait sec de la composition. En revanche, comme indiqué plus haut, il convient de ne pas introduire dans les compositions selon l'invention d'agent susceptible d'influencer de façon importante la coalescence des polymères et copolymères acryliques.

Selon l'invention, les compositions se présentent sous forme d'une émulsion eau dans l'huile.

Les compositions selon l'invention peuvent être préparées comme suit.

Dans un disperseur muni d'une pale défloculeuse, on introduit la (ou les) dispersion(s) aqueuse(s) de polymères. On y mélange ensuite l'agent épaississant, le fongicide, le bactéricide, l'agent antimousse et, le cas échéant, l'agent dispersant et l'eau.

La (les) charge(s) minérale(s) est (sont) introduite(s) sous forte agitation jusqu'à l'obtention d'une pâte homogène et onctueuse. Si l'agent émulsifiant n'a pas été introduit jusqu'alors, on l'additionne à ce stade. L'huile (ou les huiles) est (sont) alors incorporée(s) progressivement sous forte agitation.

Le procédé de préparation des compositions selon l'invention est plus simple que ceux jusqu'alors mis en oeuvre pour préparer des compositions adhésives renfermant de la colophane et/ou ses dérivés.

Les compositions selon la présente invention sont utiles notamment au collage de revêtements de sol sur divers substrats tels des chapes à base de ciment ou d'anhydrite, des dalles en béton, des mortiers de ragréage, des carrelages, des dallages PVC et des planchers divers. Ces supports doivent au préalable être débarrassés de toute souillure ou poussière. Les compositions selon l'invention peuvent être appliquées par exemple à l'aide d'une spatule crantée, à raison d'environ 250 à 400g/m² selon la nature et/ou la texture du revêtement.

D'autres avantages présentés par les compositions selon l'invention apparaîtront plus clairement à la lecture des exemples ci-après.

### EXEMPLES

### I Préparation des compositions

Les matières premières utilisées dans la préparation des compositions selon le mode opératoire décrit précédemment sont les suivantes.
- DISPEX A40 :: dispersant, polymère acrylique hydrosoluble, commercialisé par la société ALLIED COLLOIDS ;
- DALPAD A:: solvant de la colophane et/ou dérivé de la colophane, Phénoxyéthanol, commercialisé par la société DOW FRANCE ;
- GRANOLITE 150BV :: colophane modifiée ester du triéthylèneglycol, commercialisée par la société D.R.T. (Dérivés Résiniques et Terpéniques - GRANEL S.A.).
- FINNFIX CMC :: épaississant, carboxymethylcellulose de sodium commercialisée par la société METSA-SERLA CHEMICALS sous la forme de poudre à 100 % de matière active ;
- VITACARB CM 100 :: charge minérale, carbonate de calcium, diamètre moyen 10 µm, 97% de passant à 120 µm. commercialisé par la société OMYA ;
- NOPCO® 8034 :: agent antimousse, commercialisé par la société HENKEL ;
- SYNPERONIC NP30:: nonylphénoléthoxylé commercialisé par la société ICI-Surfactant ;
- PROX-ONIC HR30:: huile de ricin éthoxylée, fabriquée et commercialisée par la société PROTEX ;
- NORPAR 15 :: coupe d'hydrocarbures aliphatiques saturés, renfermant au moins 97% en poids de n-paraffines, distillant entre 245 et 285°C, commercialisée par la société Exxon Chemical ;

L'huile de lin a été le plus souvent employée. L'huile de soja brute, commercialisée sous la dénomination YAB par la société ROBBE, a également été employée.

Différentes dispersions aqueuses de liants du commerce ont été utilisées dont les références, la nature et la provenance sont rassemblées dans la tableau (I) ci-après.

**TABLEAU (I)**

| **N°** | **Réf. commerciale** | **Société** | **Nature chimique** | **E.S. % pds** | **Tg (*)°C** |
|---|---|---|---|---|---|
| 1, 2 | Mowilith LDM 1340 | Hoechst | terpolymère d'acétate de vinyle, d'acrylate de butyle et d'éthylène | 65 | -10 |
| 3 | Revacryl®630 | Sté Française Hoechst | copolymère d'esters acryliques | 68 | ± -40 |
| 4 | Répolem 4112 | Elf Atochem | copolymère d'esters acryliques | 60 | -45 |
| 5 | Wacker EAF60 | Wacker | terpolymère acétate de vinyle/esters acryliques | 60 | -35 |
| 6 | Vinnapas AF75 | id. | copolymère d'esters acryliques | 60 | |
| 7 | Acronal® V205 | BASF | copolymère acrylique carboxylé | 69 | -40 |
| 8 | Acronal® 81D | id. | copolymère acrylique/ acrylonitrile | 60 | -55 |
| 9 | Plex® 4999D | Roehm GmbH | copolymère d'esters acryliques | 60 | ± -30 |
| 10 | Plex® 4002D | id. | polymère acrylique | 60 | ± -30 |
| 11 | Primal E 2620 | Rohm & Haas | polymère acrylique | 62 | -34 |

| | | | | | |
|---|---|---|---|---|---|
| (*) : température de transition vitreuse. "±" signifie "de l'ordre de" | | | | | |

### II - Exemples comparatifs 1 et 2

On a déterminé le temps ouvert (TO) ainsi que le tack sur plage (TSP) comme indiqué ci-après dans les exemples 3 à 11, pour une première composition adhésive traditionnelle renfermant de la colophane et une deuxième composition différant de la première essentiellement par l'absence de colophane.

La nature et la quantité des constituants de ces deux compositions, ainsi que les résultats obtenus, figurent au tableau ci-après.

| Réf. commerciale | 1ère composition adhésive traditionnelle en gramme | 2ème composition adhésive en gramme |
|---|---|---|
| MOWILITH LDM 1340 | 25 | 25 |
| WACKER EAF60 | 26 | 25 |
| NOPCO 8034 | 0,3 | 0,3 |
| Solution aqueuse de FINNFIX CMC à 5 % | 13 | 14 |
| DISPEX A40 | 0,2 | 0,2 |
| VITACARB CM100 | 97 | 97 |
| DALPAD A | 5 | 5 |
| Dibutylphtalate | 5 | 5 |
| GRANOLITE 150BV | 33 | 0 |
| Eau | 8 | 8 |
| To en minutes | 40 | 10 |
| TSP en % | 75 | 0 |

### III - Exemples 3 à 11 ; essais témoins (a) et (b)

On a déterminé le temps ouvert (TO) ainsi que le tack sur plage (TSP) comme indiqué ci-après, pour diverses compositions adhésives constituées de :
. 27,3 % en poids de liant polymérique exprimé en extrait sec,
. 43,5 % en poids de Vitacarb CM 100,
. 4,3% en poids d'huile de lin,
. 0,33% en poids de FINNFIX CMC,
. 0,3 % en poids de Nopco 8034 et
. d'eau.

La nature du liant ainsi que les résultats obtenus figurent au tableau (II) ci-après, dans lequel il est également mentionné les résultats des essais comparatifs (a) et (b). Dans ces deux essais, l'huile de lin a été remplacée par une quantité équivalente d'eau.

Après application de la colle à la spatule crantée n°6 (NFT 76.129 adhésifs et rubans adhésifs) sur un support en fibrociment, un revêtement de type aiguilleté, exempt d'un envers (fondation) en mousse de latex, est appliqué par périodes de 5min . On maroufle celui-ci, le plus régulièrement possible, en un seul aller-retour. Les dimensions des éprouvettes de moquette sont de 50 x 100 mm. Après 1 mn de collage, on procède au décollement du revêtement . On évalue alors en % la surface de colle transférée sur le revêtement. Le temps ouvert est l'intervalle de temps entre l'application et le séchage de la colle, lorsque le % de colle transférée devient nul. Dans le même temps, on procède à un essai de cisaillement, afin de vérifier que le revêtement ne glisse pas. Cela donne une notion du tack évalué en %. Le tack sur plage représente le nombre de fois où celui-ci est correct (supérieur ou égal à 70%) divisé par le nombre total de relevés.

**TABLEAU (II)**

| **Ex. N°** | **Liant :Réf. commerciale** | **TO en minutes** | **TSP en %** |
|---|---|---|---|
| 3 | Revacryl® 630 | 25 | 100 |
| 4 | Répolem 4112 | 45 | 80 |
| a | id. | 15 | 0 |
| 5 | Wacker EAF60 | 25 | 70 |
| b | id. | 25 | 50 |
| 6 | Vinnapas AF75 | 30 | 80 |
| 7 | Acronal® V205 | 25 | 100 |
| 8 | Acronal® 81D | 25 | 80 |
| 9 | Plex® 4999D | 15 | 100 |
| 10 | Plex® 4002D | 20 | 50 |
| 11 | Primal E 2620 | 30 | 50 |

### IV - Exemples 12 à 14

On a déterminé le temps ouvert (TO), comme indiqué ci-avant, pour diverses compositions adhésives constituées de :
. (31,6 - x) % en poids de Revacryl®630 (exprimé en extrait sec),
. 43,5 % en poids de Vitacarb CM 100,
. x % en poids d'huile de lin, sauf mention contraire,
. 0,33% en poids de FINNFIX CMC,
. 0,3 % en poids de Nopco 8034 et
. d'eau.

La nature et la quantité de solvant ainsi que les résultats obtenus figurent au tableau (III) ci-après.

**TABLEAU (III)**

| **Ex N°** | **"Solvant"** | **x en % pds** | **TO en minutes** |
|---|---|---|---|
| 3 | huile de lin | 4,3 | 25 |
| 12 | huile de lin | 6,5 | 35 |
| 13 | huile de lin | 9,7 | 35 |
| 14 | Norpar 15 | 4,3 | 25 |

### V - Exemples 15 à 18 ; essais témoins c et d

On a réalisé des tests de pelage suivant la norme NFT 76-126. Pour ce faire, on a déposé 350 g/m² d'une composition adhésive sur un support en fibrociment ; sur le support ainsi revêtu, on a collé un échantillon d'aiguilleté provenant de la société Sommer. On a ainsi réalisé 3 éprouvettes par temps de gommage. Les éprouvettes ont été maintenues 7 jours à 23°C +/- 2°C sous une atmosphère présentant un degré d'humidité de 50% +/- 5%. A l'aide d'un dynamomètre FRANK de type 81803, on a mesuré la force (F.A.) nécessaire à l'arrachage du matériau collé après un temps de gommage (T.G.) déterminé à la vitesse de 100 mm/min.

La constitution des compositions adhésives testées est indiquée au tableau (IV-A) ci-après dans lequel
A représente le Répolem 4112 et
B représente le produit Wacker EAF 60.

La moyenne des résultats obtenus sur trois échantillons est indiquée dans le tableau (IV-B) ci-après.

De la comparaison des résultats obtenus respectivement dans l'exemple 15 et l'essai témoin c ou dans l'exemple 16 et l'essai témoin d, il ressort que l'absence d'huile cause une diminution des temps ouverts. De l'essai 18, on observe également une perte plus rapide des propriétés mécaniques due à une forte diminution du liant.

**TABLEAU (IV-A)**

| **REFERENCES** | **15** | **c** | **16** | **d** | **17** | **18** |
|---|---|---|---|---|---|---|
| nature du liant | A | A | B | B | B | B |
| quantité (*) | 27,30 | 27,33 | 26,57 | 27,42 | 26,09 | 20,10 |
| FINNFIX CMC | 0,35 | 0,35 | 0,29 | 0,33 | 0,29 | 0,38 |
| Vitacarb CM 100 | 43,18 | 43,02 | 43,10 | 43,37 | 43,93 | 46,54 |
| huile de lin | 4,22 | 0 | 6,64 | 0 | 4,03 | 12,14 |
| Nopco 8034 | 0,11 | 0,10 | 0,12 | 0,11 | 0,11 | 0,14 |
| Synpéronic NP30 | 0 | 0 | 0 | 0 | 0,46 | 0 |
| Eau : Q.S.P. 100 | | | | | | |

| | | | | | | |
|---|---|---|---|---|---|---|
| (*) : en extrait sec. | | | | | | |

**TABLEAU (IV-B) :**

| **Forces de pelage en kN/m en fonction du temps de gommage en min.** | | | | | | |
|---|---|---|---|---|---|---|
| **Réf.** | **15** | **c** | **16** | **b** | **17** | **18** |
| T.G. | | | | | | |
| 5 | 0.144 | nd | 0.38 | 0.49 | 0.465 | 0.427 |
| 10 | 0.192 | 0.333 | 0.18 | 0.7 | 0.465 | 0.38 |
| 15 | 0.204 | 0.28 | 0.042 | 0.177 | 0.462 | 0.164 |
| 20 | 0.227 | 0.155 | 0.041 | 0.033 | 0.047 | 0.055 |
| 30 | 0.165 | 0.06 | 0.023 | nd | 0.05 | nd |
| 40 | 0.093 | 0.045 | nd | nd | nd | nd |
| 50 | 0.067 | 0.061 | nd | nd | nd | nd |
| 60 | 0.065 | 0.049 | nd | nd | nd | nd |
| nd : non déterminé. | | | | | | |

### VI - Exemples 19 et 20

On a déterminé le temps ouvert (TO) ainsi que le tack sur plage (TSP), comme indiqué ci-avant, pour deux compositions adhésives C et D constituées de :
. 122 g de WACKER EAF 60 (exprimé en humide)
. 0,3 g de NOPCO 8034
. 16 g d'une solution aqueuse de FINNFIX CMC à 5 %
. 116 g de VITACARB CM 100
. 12 g d'huile de soja brute YAB
. 3 g de PROX-ONIC HR30, tensio-actif, présent uniquement dans la composition C et, en conséquence, 6 g d'eau dans la composition C contre 9 g d'eau dans la composition D.

Les résultats obtenus figurent au tableau (V) ci-après.

**TABLEAU (V)**

| **Exemple** | **Référence de la composition** | **TO en minutes** | **TSP en %** |
|---|---|---|---|
| 19 | C | 50 | 60 |
| 20 | D | 35 | 70 |

## Revendications

1. Utilisation, pour le collage des revêtements muraux ou de sols, d'une composition adhésive ayant un temps ouvert de 15 à 90 min et exempte de colophane et/ou de dérivés de la colophane, cette composition adhésive se présentant sous la forme d'une émulsion eau dans huile et renfermant comme constituants essentiels :
a) au moins une dispersion aqueuse d'un ou de plusieurs polymères ou copolymères acryliques, possédant une température de transition vitreuse inférieure à + 5°C ;
b) des charges minérales dont les dimensions des grains sont comprises entre 0,05 et 500 µm et/ou au moins un agent épaississant, et
c) au moins une huile, végétale ou minérale, liquide à température ambiante.

2. Utilisation selon la revendication 1, caractérisée en ce que la composition adhésive renferme également un agent capable de disperser les charges minérales.

3. Utilisation selon l'une quelconque des revendications précédentes caractérisée en ce que la composition adhésive renferme également un agent émulsifiant.

4. Utilisation selon l'une quelconque des revendications précédentes caractérisée en ce que la quantité de (co)polymère acrylique, exprimée en extrait sec, représente au moins 21% en poids de la matière sèche de ladite composition.

5. Utilisation selon l'une quelconque des revendications précédentes caractérisée en ce que la quantité de (co)polymère acrylique, exprimée en extrait sec, représente au maximum 40% en poids de la matière sèche de ladite composition.

6. Utilisation selon l'une quelconque des revendications précédentes caractérisée en ce que la quantité de charges minérales est inférieure à 60% en poids de la matière sèche de ladite composition.

7. Utilisation selon l'une quelconque des revendications précédentes caractérisée en ce que la quantité de charges minérales est supérieure à 20% en poids de la matière sèche de ladite composition.

8. Utilisation selon l'une quelconque des revendications précédentes caractérisée en ce que la teneur en agent épaississant est comprise entre 0,05 et 2% poids de la matière sèche de ladite composition.

9. Utilisation selon l'une quelconque des revendications précédentes caractérisée en ce que la quantité d'huile, minérale ou végétale, représente de 2 à 10% en poids de la matière sèche de ladite composition.

10. Utilisation selon l'une quelconque des revendications 2 à 9, caractérisée en ce que la quantité d'agent dispersant représente de 0,05 à 0,5% et, de préférence, de 0,1 à 0,2% en poids de la matière sèche de la composition.

11. Utilisation selon l'une quelconque des revendications 3 à 10 caractérisée en ce que la quantité d'agent émulsifiant représente au maximum 2% en poids de la matière sèche de ladite composition.

12. Utilisation selon l'une quelconque des revendications précédentes caractérisée en ce que l'agent épaississant est choisi parmi les éthers cellulosiques et leurs mélanges.

13. Utilisation selon l'une quelconque des revendications précédentes caractérisée en ce que les charges minérales sont du carbonate de calcium.

14. Utilisation selon l'une quelconque des revendications précédentes caractérisée en ce que l'huile est de l'huile de lin.

15. Utilisation selon l'une quelconque des revendications précédentes caractérisée en ce que, dans sa présentation prête à l'emploi, elle renferme de 10 à 40% et, de préférence, de 20 à 30% en poids d'eau.

## Claims

1. Use, for sticking wall or floor coverings, of an adhesive composition having an open time of 15 to 90 minutes and not containing colophony and/or colophony derivatives, this adhesive composition being in the form of a water-in-oil emulsion and containing, as essential constituents:
a) at least one aqueous dispersion of one or more acrylic polymers or copolymers, having a glass transition temperature of less than +5°C;
b) mineral fillers, the particle size of which is between 0.05 and 500 µm, and/or at least one thickener, and
c) at least one vegetable or mineral oil which is liquid at room temperature.

2. Use according to Claim 1, characterized in that the adhesive composition also contains an agent able to disperse mineral fillers.

3. Use according to any one of the preceding claims, characterized in that the adhesive composition also contains an emulsifier.

4. Use according to any one of the preceding claims, characterized in that the amount of acrylic polymer or copolymer, expressed as dry extract, represents at least 20% by weight of the dry matter of said composition.

5. Use according to any one of the preceding claims, characterized in that the amount of acrylic polymer or copolymer, expressed as dry extract, represents at most 40% by weight of the dry matter of the composition.

6. Use according to any one of the preceding claims, characterized in that the amount of mineral fillers is less than 60% by weight of the dry matter of said composition.

7. Use according to any one of the preceding claims, characterized in that the amount of mineral fillers is higher than 20% by weight of the dry matter of said composition.

8. Use according to any one of the preceding claims, characterized in that the content of thickener is between 0.05 and 2% by weight of the dry matter of said composition.

9. Use according to any one of the preceding claims, characterized in that the amount of mineral or vegetable oil represents 2 to 10% by weight of the dry matter of said composition.

10. Use according to any one of Claims 2 to 9, characterized in that the amount of dispersing agent represents 0.05 to 0.5% and preferably 0.1 to 0.2% by weight of the dry matter of the composition.

11. Use according to any one of Claims 3 to 10, characterized in that the amount of emulsifier represents at most 2% by weight of the dry matter of said composition.

12. Use according to any one of the preceding claims, characterized in that the thickener is chosen from cellulose ethers and mixtures thereof.

13. Use according to any one of the preceding claims, characterized in that the mineral fillers are calcium carbonate.

14. Use according to any one of the preceding claims, characterized in that the oil is linseed oil.

15. Use according to any one of the preceding claims, characterized in that, in its ready-to-use form, it contains 10 to 40% and preferably 20 to 30% by weight of water.

## Patentansprüche

1. Verwendung einer Adhäsivzusammensetzung mit einer offenen Zeit bzw. Verarbeitungszeit von 15 bis 90 min und frei von Kolophonium und/oder Derivaten des Kolophoniums zum Verleimen von Wand- und Bodenverkleidungen, wobei diese Adhäsivzusammensetzung sich in Form einer Wasser-in-Öl-Emulsion präsentiert und als wesentliche Bestandteile enthält:
a) wenigstens eine wäßrige Dispersion von einem oder mehreren Polymeren oder Akrylpolymeren mit einer Glasübergangstemperatur unter +5°C;
b) mineralische Füllstoffe, deren Korngrößen enthalten sind zwischen 0,05 und 500 µm und wenigstens ein Verdickungsmittel, und
c) wenigstens ein bei Umgebungstemperatur flüssiges pflanzliches oder mineralisches Öl.

2. Verwendung nach Anspruch 1, dadurch gekennzeichnet, daß die Adhäsivzusammensetzung auch ein Mittel enthält, das fähig ist, die mineralischen Füllstoffe zu dispergieren.

3. Verwendung nach einem der vorangehenden Ansprüche, dadurch gekennzeichnet, daß die Adhäsivzusammensetzung auch ein Emulgierungsmittel enthält.

4. Verwendung nach einem der vorangehenden Ansprüche, dadurch gekennzeichnet, daß die Menge an Acryl(co)polymer, ausgedrückt in Trockensubstanz, wenigstens 20 Gew.-% des Trockenmaterials der genannten Zusammensetzung darstellt.

5. Verwendung nach einem der vorangehenden Ansprüche, dadurch gekennzeichnet, daß die Menge an Acryl(co)polymer, ausgedrückt in Trockensubstanz, maximal 40 Gew.-% des Trockenmaterials der genannten Zusammensetzung darstellt.

6. Verwendung nach einem der vorangehenden Ansprüche, dadurch gekennzeichnet, daß die Menge der mineralischen Füllstoffe weniger als 60 Gew.-% des Trockenmaterials der genannten Zusammensetzung beträgt.

7. Verwendung nach einem der vorangehenden Ansprüche, dadurch gekennzeichnet, daß die Menge der mineralischen Füllstoffe mehr als 20 Gew.-% des Trockenmaterials der genannten Zusammensetzung beträgt.

8. Verwendung nach einem der vorangehenden Ansprüche, dadurch gekennzeichnet, daß der Gehalt an Verdickungsmittel zwischen 0,05 und 2 Gew.-% des Trockenmaterials der genannten Zusammensetzung beträgt.

9. Verwendung nach einem der vorangehenden Ansprüche, dadurch gekennzeichnet, daß die Menge an pflanzlichem oder mineralischem Öl von 2 bis 10 Gew.-% des Trockenmaterials der genannten Zusammensetzung darstellt.

10. Verwendung nach einem der Ansprüche 2 bis 9, dadurch gekennzeichnet, daß das Dispergierungsmittel 0,05 bis 0,5 Gew.-% und vorzugsweise 0,1 bis 0,2 Gew.-% des Trockenmaterials der Zusammensetzung darstellt.

11. Verwendung nach einem der Ansprüche 3 bis 10, dadurch gekennzeichnet, daß die Menge des Emulgierungsmittels 2 Gew.-% des Trockenmaterials der genannten Zusammensetzung darstellt.

12. Verwendung nach einem der vorangehenden Ansprüche, dadurch gekennzeichnet, daß das Verdickungsmittel unter den Zelluloseethern und ihren Mischungen ausgewählt wird.

13. Verwendung nach einem der vorangehenden Ansprüche, dadurch gekennzeichnet, daß die mineralischen Füllstoffe Kalziumcarbonat sind.

14. Verwendung nach einem der vorangehenden Ansprüche, dadurch gekennzeichnet, daß das Öl Leinöl ist.

15. Verwendung nach einem der vorangehenden Ansprüche, dadurch gekennzeichnet, daß es in seiner gebrauchsfertigen Form 10 bis 40 Gew.-% und vorzugsweise 20 bis 30 Gew.-% Wasser enthält.
